(19) Europäisches Patentamt
European Patent Office
Office européen des brevets

(11) **EP 2 645 311 B1**

(12) **FASCICULE DE BREVET EUROPEEN**

(45) Date de publication et mention
de la délivrance du brevet:
**03.03.2021 Bulletin 2021/09**

(21) Numéro de dépôt: **13160948.9**

(22) Date de dépôt: **25.03.2013**

(51) Int Cl.:
*G06N 5/04* *(2006.01)*          *H04W 4/20* *(2018.01)*
*G06Q 10/10* *(2012.01)*         *H04L 12/58* *(2006.01)*
*G06Q 50/00* *(2012.01)*         *H04W 4/21* *(2018.01)*
*H04W 4/029* *(2018.01)*         *G06F 16/9535* *(2019.01)*
*H04L 29/08* *(2006.01)*         *H04W 4/02* *(2018.01)*

(54) **Procédé et système de notification, à un utilisateur d'un terminal, de données contextuelles relatives à des éléments identifiés dans une application de type répertoire**

Verfahren und System zur Benachrichtung eines Endgerätbenutzers von Kontextdaten, die im Zusammenhang mit identifizierten Elementen einer Anwendung vom Typ Adressbuch/Verzeichnis stehen

Method and system for notifying a user of a terminal of contextual data relating to elements identified in an address book application

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.03.2012 FR 1252698**

(43) Date de publication de la demande:
**02.10.2013 Bulletin 2013/40**

(73) Titulaire: **ORANGE**
**75015 Paris (FR)**

(72) Inventeurs:
• **Szczerbak, Michal**
**22300 Lannion (FR)**
• **Toutain, François**
**22700 Louannec (FR)**

(74) Mandataire: **Cabinet Beau de Loménie**
**158, rue de l'Université**
**75340 Paris Cedex 07 (FR)**

(56) Documents cités:
**WO-A1-2009/084749    WO-A1-2010/103163**
**WO-A1-2011/000046    WO-A2-2007/067075**
**GB-A- 2 434 504       US-A1- 2007 143 427**
**US-A1- 2010 324 963**

• **FRANCOIS TOUTAIN ET AL: "Interpersonal context-aware communication services", IEEE COMMUNICATIONS MAGAZINE, IEEE SERVICE CENTER, PISCATAWAY, US, vol. 49, no. 1, 1 janvier 2011 (2011-01-01), pages 68-74, XP011341187, ISSN: 0163-6804, DOI: 10.1109/MCOM.2011.5681018**
• **MOLTCHANOV B ET AL: "Context management and reasoning for adaptive service provisioning", ULTRA MODERN TELECOMMUNICATIONS&WORKSHOPS, 2009. ICUMT '09. INTERNATIONAL CONFERENCE ON, IEEE, PISCATAWAY, NJ, USA, 12 octobre 2009 (2009-10-12), pages 1-6, XP031574272, ISBN: 978-1-4244-3942-3**
• **BANERJEE N ET AL: "R-U-In? - Exploiting Rich Presence and Converged Communications for Next-Generation Activity-Oriented Social Networking", MOBILE DATA MANAGEMENT: SYSTEMS, SERVICES AND MIDDLEWARE, 2009. MDM '09. TENTH INTERNATIONAL CONFERENCE ON, IEEE, PISCATAWAY, NJ, USA, 18 mai 2009 (2009-05-18), pages 222-231, XP031476823, ISBN: 978-1-4244-4153-2**

- MONTES-Y-GOMEZ M ET AL: "Information retrieval with conceptual graph matching", DATABASE AND EXPERT SYSTEMS APPLICATIONS. 11TH INTERNATIONAL CONFERENCE, DEXA 2000. PROCEEDINGS 4-8 SEPT , 4 septembre 2000 (2000-09-04), 8 septembre 2000 (2000-09-08), pages 312-321, XP002687737, Lectures Notes in Computer Science, Springer Verlag Berlin Germany ISBN: 3-540-67978-2 Extrait de l'Internet: URL:http://download.springer.com/static/pd f/395/chp%253A10.1007%252F3-540-44469-6_29 .pdf?auth66=1354126216_b8ef50e5b219cf805a 6 82f3feae04fcf&ext=.pdf [extrait le 2012-11-22]
- AHMED BOUABDALLAH ET AL: "On the benefits of a network-centric implementation for context-aware telecom services", INTELLIGENCE IN NEXT GENERATION NETWORKS (ICIN), 2011 15TH INTERNATIONAL CONFERENCE ON, IEEE, 4 October 2011 (2011-10-04), pages 236-240, XP032010069, DOI: 10.1109/ICIN.2011.6081081 ISBN: 978-1-61284-319-3
- MICHAL SZCZERBAK ET AL: "Collaborative Context Experience in a Phonebook", ADVANCED INFORMATION NETWORKING AND APPLICATIONS WORKSHOPS (WAINA), 2012 26TH INTERNATIONAL CONFERENCE ON, IEEE, 26 March 2012 (2012-03-26), pages 1275-1281, XP032169947, DOI: 10.1109/WAINA.2012.37 ISBN: 978-1-4673-0867-0
- FRANCOIS TOUTAIN ET AL: "Semantic Context Reasoning for Formulating User Location", ADVANCED INFORMATION NETWORKING AND APPLICATIONS WORKSHOPS (WAINA), 2012 26TH INTERNATIONAL CONFERENCE ON, IEEE, 26 March 2012 (2012-03-26), pages 671-677, XP032169862, DOI: 10.1109/WAINA.2012.60 ISBN: 978-1-4673-0867-0
- ELENA BARALIS ET AL: "CAS-: providing personalized services in context-aware applications by means of generalized rules", KNOWLEDGE AND INFORMATION SYSTEMS ; AN INTERNATIONAL JOURNAL, SPRINGER-VERLAG, LO, vol. 28, no. 2, 12 November 2010 (2010-11-12), pages 283-310, XP019936565, ISSN: 0219-3116, DOI: 10.1007/S10115-010-0359-Z

**Description**

La présente invention concerne le domaine du traitement de données contextuelles dans un terminal de communication.

Elle concerne plus particulièrement un procédé de notification, à un utilisateur d'un terminal de communication, de données contextuelles relatives à des éléments identifiés dans une application de type répertoire.

On entend ici par "éléments", des personnes ou des objets matériels communicants.

On entend ici par "application de type répertoire", des applications de communication pour terminaux de communication, en particulier des répertoires de type téléphonique (*phone book* en anglais), encore désignés par carnets d'adresses (*address book*) ou listes de contacts (*contact list*). Ces applications de type répertoire, dans le domaine des télécommunications mettent à la disposition de l'utilisateur d'un terminal des listes de personnes ou contacts auxquels sont associées des informations concernant typiquement des coordonnées téléphoniques ou des adresses de courrier électronique.

Dans la suite de la description, on utilisera indifféremment les expressions "répertoire", "liste de contacts " ou "carnet d'adresses". Les terminaux de communication considérés dans le cadre de la présente description englobent notamment des terminaux de communication mobiles, tels que téléphones dits intelligents (*smartphones*), ou des terminaux de communication fixes, tels que des téléphones IP (*Internet Protocol*).

Les applications de type répertoire considérées peuvent être par conséquent associées à des applications de téléphonie sur réseaux mobiles ou sur réseaux IP, mais également à des applications de communication sur réseaux sociaux informatiques.

Avec le développement des capteurs multiples équipant actuellement les terminaux de communication, les utilisateurs peuvent à présent disposer d'informations concernant la situation dans laquelle se trouve un contact répertorié dans leur terminal ; ces informations de situation, souvent désignées par informations *contextuelles,* concernent par exemple la localisation, la disponibilité, ou les activités d'un utilisateur.

Ces informations contextuelles peuvent être automatiquement mises à jour par le terminal via des capteurs spécifiques, ou bien déclaratives, c'est-à-dire paramétrées et mises à jour par l'utilisateur du terminal (par exemple, pour des informations telles que son humeur ou sa disponibilité). Les informations contextuelles sont généralement transmises à une application hébergée par un serveur sur un réseau de communication, qui met à jour un état d'une personne identifiée donnée avec les nouvelles informations reçues. Les mises à jour sont alors propagées selon un processus client-serveur, au travers du réseau de communication, vers les applications de répertoire clientes des terminaux de communication associés à la communauté d'utilisateurs abonnés ou inscrits au service.

A titre d'exemple, le document intitulé « Context-Phonebook - Extending Mobile Phone Applications with Context », de A. Schmidt, T. Stuhr, et H. Gellersen - Third International Workshop on Human Computer Interaction with Mobile Devices, 2001, présente un répertoire téléphonique (*phone book*) pour téléphone mobile, contenant, en plus des informations de numéros de téléphone, des informations de contexte relatives aux utilisateurs référencés dans le répertoire. Ces informations de contexte concernent notamment l'état de connexion des utilisateurs, leurs préférences de disponibilité, ou leur localisation.

Cependant un tel répertoire téléphonique, même enrichi par des informations contextuelles relatives aux contacts, ne permet pas à un utilisateur de recevoir de manière automatique des notifications concernant des situations contextuelles particulières dans lesquelles cet utilisateur ou ses contacts se trouvent.

Le document WO 2010/103163 décrit un terminal mobile et un procédé pour fournir des observations de vie.

La présente invention vise à améliorer la situation exposée ci-dessus, en proposant, selon un premier aspect, un procédé de notification, à un utilisateur d'un premier terminal de communication, de données contextuelles relatives à des éléments identifiés dans une application de type répertoire. Conformément à l'invention, ce procédé comporte des étapes de :

(A) - constitution d'une base de données de situations contextuelles de référence, chaque situation contextuelle de référence étant définie comme une combinaison particulière de données contextuelles relatives à un ensemble de types d'éléments identifiés dans un répertoire d'un terminal de communication ;

(B) - comparaison, selon au moins un critère de similarité prédéfini, de ces situations contextuelles de référence avec les données contextuelles courantes associées aux éléments identifiés dans le répertoire du premier terminal ;

(C) - si lors de la comparaison, au moins une situation contextuelle de référence est déterminée comme étant similaire à la situation contextuelle courante d'au moins un sous-ensemble d'éléments du répertoire du premier terminal, présentation dans le premier terminal de communication d'un message de notification représentatif de ladite au moins une situation contextuelle de référence similaire.

Appliquée à un répertoire téléphonique, la présente invention permet avantageusement de notifier l'utilisateur du terminal considéré (premier terminal) de situations contextuelles relatives à des personnes référencées dans son carnet d'adresses électronique. Une telle notification selon l'invention est effectuée automatiquement par une comparaison, transparente pour l'utilisateur, entre les données contextuelles courantes - définissant une situation contextuelle courante d'un ou plusieurs de ses contacts - avec les définitions de situations contextuelles de référence stockées dans la base de données.

Selon un mode de réalisation particulier de l'invention, les données contextuelles relatives à un élément identifié dans un répertoire accessible via un terminal de communication, incluent tout ou partie des informations contextuelles suivantes :

- géo-localisation de l'élément ;
- disponibilité de l'élément s'il s'agit d'une personne ;
- activité en cours de l'élément ;
- humeur de l'élément s'il s'agit d'une personne ;
- applications informatiques en cours d'utilisation par l'élément.

Selon une caractéristique particulière de l'invention, le procédé de notification comporte en outre une étape de création, par l'utilisateur du premier terminal, de règles de notification de situations contextuelles, dites "règles de notification", chaque règle de notification associant un message de notification et une situation contextuelle prédéfinie, dite "situation contextuelle utilisateur", relative à un sous-ensemble d'éléments du répertoire, la présentation du message de notification dans le premier terminal étant déclenchée lorsque la situation contextuelle courante relative audit sous-ensemble d'éléments du répertoire correspond à la situation contextuelle utilisateur associée au message de notification par la règle de notification.

Grâce à la caractéristique précitée, le procédé selon l'invention permet en outre à l'utilisateur du premier terminal de définir lui-même des règles de notification, en paramétrant des situations contextuelles concernant ses contacts (situations contextuelles dites "utilisateur"), pour lesquelles il souhaite être notifié automatiquement lorsque ces situations deviennent effectives. On notera ici, que selon l'invention l'utilisateur peut également intégrer dans les règles qu'il définit des données contextuelles le concernant, il suffit pour cela qu'il soit lui-même référencé par l'application de répertoire de son terminal.

Par exemple, l'utilisateur pourra définir la règle suivante *"vous êtes au cinéma, voulez-vous activer le mode silencieux ?"*, la localisation du terminal dans un cinéma étant automatiquement détectée par l'application de géo-localisation du terminal.

Selon une autre caractéristique de l'invention, l'étape de comparaison (B) inclut en outre la comparaison, selon le critère de similarité, des situations contextuelles de référence avec les situations contextuelles utilisateur.

Cette caractéristique permet ainsi, notamment, de privilégier une règle de notification de l'utilisateur particulière lorsque la situation contextuelle utilisateur correspondante est déterminée comme étant similaire à une situation contextuelle de référence, ou bien d'enrichir le message de notification de la règle de notification considérée par un message additionnel correspondant à la situation contextuelle de référence.

Selon une autre caractéristique de l'invention, l'étape (A) de constitution d'une base de données de situations contextuelles de référence, lorsque les éléments identifiés sont des personnes, inclut :

(a1) - la réception de données représentatives de situations contextuelles utilisateurs en provenance de terminaux de communication d'une communauté d'utilisateurs, incluant le premier terminal, et équipés respectivement d'une application de type répertoire téléphonique dans lequel les personnes identifiées sont associées à des données contextuelles ;

(a2) - la généralisation sémantique des situations contextuelles utilisateur reçues afin d'obtenir un ensemble de situations contextuelles de référence.

En particulier, selon un mode de réalisation, l'opération de généralisation sémantique (a2) de situations contextuelles utilisateur comprend :

(a21) - le regroupement desdites situations contextuelles utilisateurs en fonction d'au moins un critère de similarité prédéfini afin d'obtenir des groupes de situations contextuelles utilisateurs similaires ;

(a22) - l'application d'un traitement de généralisation sémantique à chacun des groupes de situations contextuelles utilisateurs obtenu, afin de déterminer pour chacun desdits groupes au moins une situation contextuelle de référence, et former ainsi un ensemble de situations contextuelles de référence.

Selon le processus de constitution de la base de données de situations contextuelles exposé ci-dessus, c'est donc la communauté d'utilisateurs qui enrichit la base de données de manière dynamique, par l'envoi automatique de situations contextuelles utilisateur définies par les utilisateurs de la communauté d'utilisateurs lors de la création de règles de notification. Par conséquent, les situations contextuelles de référence obtenues par généralisation sémantique des situations contextuelles utilisateur, évoluent et s'enrichissent en fonction des règles de notification créées par la communauté d'utilisateurs.

Ainsi, dans le cas de la règle donnée en exemple plus haut *"vous êtes au cinéma, voulez-vous activer le mode silencieux ?"*, une généralisation de la règle pourrait aboutir au message suivant : "*vous êtes dans un endroit public de culture et de divertissement, acceptez-vous le passage en mode silencieux de votre terminal ?*",

Selon une autre caractéristique particulière de l'invention, l'étape de présentation d'un message de notification de situation contextuelle dans le premier terminal, est suivie d'une étape de sélection par l'utilisateur du premier terminal, effectuée au travers d'une interface utilisateur, d'au moins une option de traitement du message de notification, parmi un ensemble d'options comprenant au moins les options suivantes :

- acceptation de la notification ;
- enregistrement local de la notification ;
- rejet de la notification ;
- transfert de la notification.

Ainsi, l'utilisateur a la possibilité d'exprimer son choix quant à l'utilisation de la notification qu'il reçoit. En particulier, il pourra décider d'enregistrer localement cette notification sous la forme d'une nouvelle règle de notification, ou au contraire rejeter cette notification afin de ne plus la recevoir. Dans tous les cas, le choix exprimé par l'utilisateur est transmis automatiquement au serveur d'application hébergeant la base de données de situations contextuelles sur le réseau, par exemple afin de pondérer un critère d'usage de la situation contextuelle correspondante dans le processus de création de l'ensemble de situations contextuelles de référence.

Selon un mode de réalisation particulier, le message de notification de situation contextuelle présenté dans le premier terminal, inclut au moins une recommandation d'action à l'utilisateur du premier terminal.

Une telle action pourra être dérivée par exemple d'actions définies par les utilisateurs de la communauté d'utilisateurs dans le cadre des règles de notification locales.

En particulier, selon une mise en œuvre particulière de l'invention, la présentation d'un message de notification de situation contextuelle, dans le premier terminal, déclenche l'exécution automatique dans le premier terminal d'une action de communication avec au moins un contact de l'utilisateur du premier terminal.

Une telle action automatiquement exécutée pourra être paramétrée par l'utilisateur suite à un premier message de recommandation de l'action. En particulier, une telle action automatiquement exécutée pourra consister dans l'envoi d'un message d'alerte à un ou plusieurs contacts de l'utilisateur, ou bien dans le déclenchement d'une communication téléphonique ou par messages courts (SMS), par exemple, avec un ou plusieurs contacts.

Selon une caractéristique particulière de réalisation, chaque personne identifiée dans le répertoire téléphonique d'un terminal considéré de la communauté d'utilisateurs, est associé à une information sémantique représentative de la relation sociale entre la personne et l'utilisateur du terminal.

Cette information additionnelle aux données de contexte permet de faciliter la définition de situations contextuelles complexes faisant intervenir plusieurs personnes identifiées dans le carnet d'adresses de l'utilisateur, y compris l'utilisateur lui-même.

Corrélativement, selon un deuxième aspect, l'invention concerne un système de notification, à un utilisateur d'un premier terminal de communication, de données contextuelles relatives à des personnes identifiées dans une application de type répertoire téléphonique du premier terminal. Conformément à l'invention ce système comporte :

- des moyens de stockage d'une base de données de situations contextuelles de référence, chaque situation contextuelle de référence étant définie comme une combinaison particulière de données contextuelles relatives à un ensemble de types de personnes identifiées dans un répertoire téléphonique d'un terminal de communication ;
- des moyens de comparaison, selon un critère de similarité prédéfini, desdites situations contextuelles de référence avec les données contextuelles courantes associées aux personnes identifiées dans le répertoire téléphonique du premier terminal ;
- des moyens de présentation dans le premier terminal de communication d'un message de notification représentatif d'au moins une situation contextuelle de référence qui a été déterminée comme étant similaire à une situation contextuelle courante d'au moins un sous-ensemble de personnes du répertoire du premier terminal.

Selon le mode de réalisation choisi et décrit, le système de notification brièvement exposé ci-dessus repose sur une architecture de type client-serveur, par conséquent, selon respectivement un troisième et un quatrième aspect, l'invention a aussi pour objets, d'une part un serveur d'application sur un réseau de communication, et d'autre part un terminal de communication.

Ainsi, selon le troisième aspect, le serveur d'application selon l'invention comprend :

- des moyens de stockage d'une base de données de situations contextuelles de référence, chaque situation contextuelle de référence étant définie comme une combinaison particulière de données contextuelles relatives à un ensemble de types de personnes identifiées par une application de type répertoire téléphonique d'un terminal de communication ;
- des moyens de réception de données représentatives de situations contextuelles utilisateurs en provenance de terminaux de communication d'une communauté d'utilisateurs, et équipés respectivement d'une application de type répertoire téléphonique dans lequel les personnes identifiées sont associées à des données contextuelles ;
- des moyens de généralisation sémantique des situations contextuelles utilisateurs reçues afin d'obtenir un ensemble de situations contextuelles de référence enregistré dans ladite base de données.

En pratique, le procédé de notification selon l'invention est mis en œuvre sous forme d'un ensemble de programmes d'ordinateur réparti entre un serveur d'application selon l'invention et des terminaux d'utilisateurs selon l'invention. Par conséquent, selon un dernier aspect la présente invention a pour objet un programme d'ordinateur comportant des instructions de programme pour la mise en œuvre de tout ou partie des étapes d'un procédé de notification tel que brièvement exposé plus haut, lorsque ce programme est exécuté par un processeur.

Par ailleurs, un programme d'ordinateur selon l'invention peut utiliser n'importe quel langage de programmation, et être sous forme de code source, code objet, ou de code intermédiaire entre code source et code objet, tel que dans une forme partiellement compilée, ou dans n'importe quelle autre forme souhaitable.

L'invention vise aussi par conséquent un support d'enregistrement d'informations lisible par un ordinateur, et comportant des instructions d'un programme d'ordinateur selon l'invention. Un tel support d'enregistrement peut être constitué par n'importe quelle entité ou dispositif capable de stocker un tel programme. Par exemple, le support peut comporter un moyen de stockage, tel qu'une mémoire de type ROM (*read only memory*), par exemple un CD ROM ou une ROM de circuit microélectronique, ou encore un moyen d'enregistrement amovible tel qu'une clé USB ou un moyen d'enregistrement magnétique, tel qu'un disque dur. D'autre part, un programme ou module logiciel selon l'invention peut être en particulier téléchargé sur un réseau de type Internet.

L'invention est définie par les revendications indépendantes de procédé 1, de programme d'ordinateur 10, se système 11 et de serveur d'application 12.

D'autres caractéristiques et avantages de la présente invention ressortiront de la description détaillée qui suit, laquelle fait référence aux dessins annexés dans lesquels :

- la figure 1 représente un système de notification conforme à l'invention, selon un mode de réalisation reposant sur une architecture client-serveur ;
- la figure 2 illustre sous forme d'un organigramme les étapes d'un procédé de notification, selon un mode de réalisation de l'invention ; et
- les figures 3a-3c illustrent respectivement un modèle de graphe conceptuel utilisé pour définir une situation contextuelle complexe (méta-situation), un exemple de méta-arbre représentant un groupe de méta-situations, et un exemple de traitement d'un sous-arbre au cours d'un processus de généralisation sémantique, selon un mode de réalisation de l'invention.

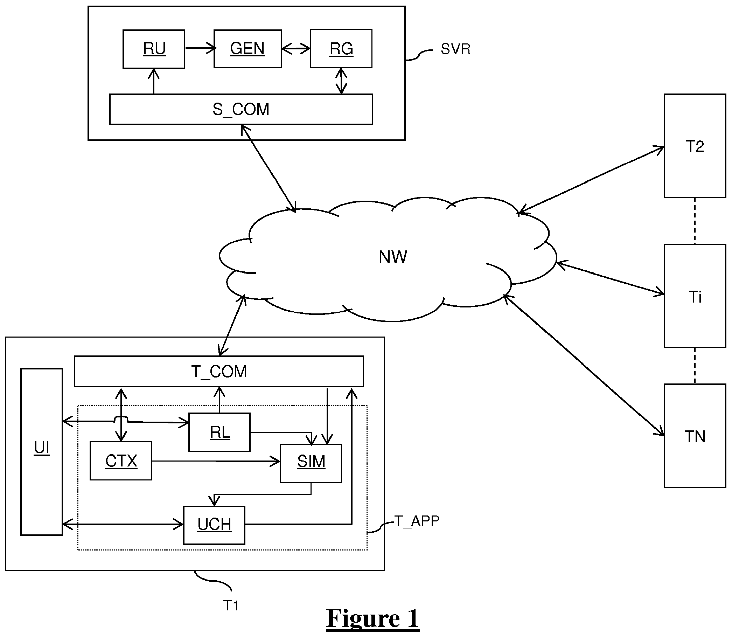

La **figure 1** illustre un système de notification selon l'invention selon un mode de réalisation reposant sur une architecture client-serveur.

Comme représenté sur la figure 1, le système de notification selon l'invention comporte un serveur d'application SVR connecté à un réseau de communication NW et un ensemble de N terminaux de communication T1 à TN par exemple des téléphones mobile de type *smartphone.* Cependant, cet ensemble de terminaux peut également inclure des terminaux autres que des smartphones par exemple des ordinateurs personnels (PC). Chaque terminal peut également être connecté au réseau NW.

Sur la figure 1, on a représenté un seul réseau (NW) pour simplifier la figure, cependant le réseau NW englobe des réseaux de différents types en fonction du terminal utilisateur considéré. Ainsi, le réseau NW peut englober un réseau de communication de type réseau IP et un réseau de téléphonie mobile de troisième génération (UMTS).

Chaque terminal T1-TN est équipé d'une application de type répertoire téléphonique ou carnet d'adresses T_APP selon l'invention, et les utilisateurs de ces terminaux forment ainsi une communauté d'utilisateurs abonnés ou inscrits à un service de répertoire téléphonique enrichi, selon lequel tous les utilisateurs des terminaux peuvent être identifiés dans une application de répertoire hébergée par un serveur de données contextuelles dédié sur le réseau. Ce serveur de données contextuelles, qui peut être confondu ou distinct du serveur d'application SVR, centralise les informations contextuelles mises à jour dans les terminaux par les applications locales respectives T_APP, puis propage les mises à jour aux applications locales des différents terminaux, pour les contacts identifiés localement.

On peut aussi envisager des applications locales T_APP de répertoire dont la consultation de données relatives à un contact donné déclenche la transmission d'une requête de téléchargement des données correspondantes enregistrées dans le serveur de données de contexte.

Selon un autre type d'implémentation du service de répertoire téléphonique selon l'invention, on peut prévoir une architecture de type pair-to-pair (*peer-to-peer*) selon laquelle les données concernant chaque utilisateur de la communauté sont gérées par l'application locale T APP du terminal de cet utilisateur, et les mises à jour transmises automatiquement aux autres terminaux.

De retour à la figure 1, en référence aux blocs fonctionnels représentés à l'intérieur du terminal T1 et du serveur d'application SVR, on va détailler les modules fonctionnels composant d'une part la partie cliente (T_APP) d'une application de répertoire téléphonique selon l'invention, et d'autre part, la partie serveur d'une application de répertoire téléphonique, chargée de la gestion d'une base de données de situations contextuelles, selon l'invention.

Comme représenté sur la figure 1, le terminal T1 inclut un module de communication T_COM, une application de répertoire téléphonique T APP, et une interface utilisateur UI.

Le module de communication T_COM relié au réseau NW permet notamment, d'une part, de recevoir des situations contextuelles de référence en provenance du serveur d'application SVR. D'autre part, le module T_COM est chargé de transmettre à un serveur de données de contexte, comme exposé plus haut, les données de contexte mises à jour dans le terminal, et de recevoir les mises à jour de données de contexte en provenance d'autres terminaux de la communauté de terminaux (T2-TN). Le module T_COM est également chargé de transmettre au serveur d'application SVR les règles de notifications créées localement dans le terminal T1 par l'utilisateur.

L'application T_APP du terminal T1 comprend les modules suivants:

- Un module de règles RL chargé de la création et le stockage de règles de notification de situations contextuelles (règles de notification) ; chaque règle de notification associe un message de notification et une situation contextuelle définie par l'utilisateur (désignée par "situation contextuelle utilisateur") et relative à un sous-ensemble de personnes du répertoire.
- Un module de contexte CTX contenant les données de contexte courantes relatives aux contacts du répertoire.
- Un module de comparaison, SIM, chargé d'effectuer des comparaisons, selon un ou plusieurs critères de similarité prédéfinis, entre les situations contextuelles de référence reçues du serveur d'application SVR, les données contextuelles courantes associées aux personnes identifiées dans le répertoire téléphonique du terminal - c'est-à-dire correspondant à une situation contextuelle courante -, et le cas échéant, les règles de notifications stockées localement (module RL).
- Un module UCH de décision, apte à déclencher une action (notification de situation, recommandation d'action, exécution automatique d'une action) en fonction d'un résultat de comparaison fourni par le module SIM ; le module UCH est également chargé de présenter à l'utilisateur, via l'interface utilisateur UI, un choix d'options de notifications suite aux résultats de comparaison fournis par le module SIM, puis à effectuer une action en fonction d'une option choisie par l'utilisateur.

Le serveur d'application SVR désigné, dans le cadre du présent exposé, par "serveur de situations contextuelles de référence" ou bien "serveur de règles contextuelles généralisées", inclut les modules fonctionnels suivants :

- Un module RU de stockage de données représentatives de situations contextuelles utilisateurs (règles de notifications) reçues en provenance de l'ensemble de terminaux T1-TN de la communauté d'utilisateurs, au travers du réseau NW.
- Un module GEN chargé d'appliquer un algorithme de généralisation sémantique aux règles de notification utilisateurs reçues et stockées par le module RU.
- Un module RG de stockage d'un ensemble de situations contextuelles de référence obtenu à partir du module GEN de généralisation.
- Un module de communication S_COM relié au réseau NW, permettant notamment, d'une part, de recevoir des données contextuelles en provenance de l'ensemble des terminaux d'utilisateurs T1-TN, et de leur transmettre des règles contextuelles généralisées.

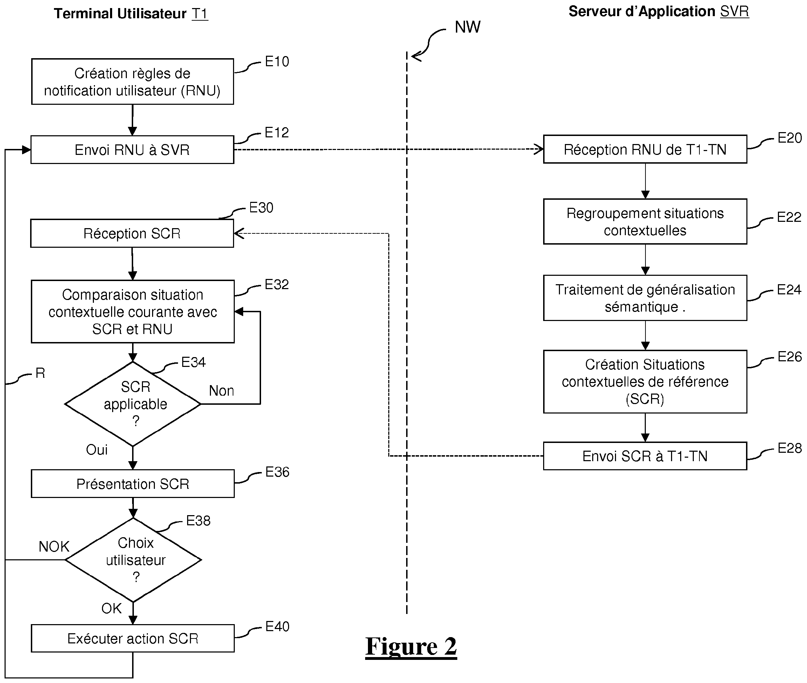

La **figure 2** représente sous forme d'un organigramme les étapes d'un procédé de notification, selon un mode de réalisation de l'invention.

Comme représenté sur la figure 2, à l'étape E10 l'utilisateur du terminal T1 dispose de la possibilité de créer des règles de notification dites "utilisateurs" (RNU). Chaque règle de notification associe un message de notification et une situation contextuelle définie par l'utilisateur (situation contextuelle utilisateur) à partir des données contextuelles relative une ou plusieurs personnes identifiées dans le répertoire téléphonique.

Dans le mode de réalisation choisi, ces données contextuelles incluent tout ou partie des informations contextuelles suivantes :

- géo-localisation de la personne ;
- disponibilité de la personne ;
- activité en cours de la personne ;
- humeur de la personne ;
- applications informatiques en cours d'utilisation par la personne.

Certaines données contextuelles sont obtenues directement à partir de capteurs dans les terminaux des personnes concernées (capteur de géo-localisation (GPS), disponibilité d'une personne déterminée en fonction des données présentes dans un agenda électronique, activité déterminée par détection automatique des applications utilisées dans le terminal, ...). D'autres données contextuelles ("humeur" par exemple) peuvent résulter de l'entrée d'informations dans l'application de répertoire, directement par la personne considérée (données de contexte déclaratives).

Par ailleurs, selon l'application de répertoire ou carnet d'adresses selon l'invention, chaque personne identifiée dans le répertoire d'un terminal quelconque (T1-TN) de la communauté d'utilisateurs, est associé à une information sémantique représentative de la relation sociale entre la personne et l'utilisateur du terminal, par exemple "fils, fille, épouse, mari, ami, mère, père, belle-mère, grand-père, grand-mère, ... ".

L'association d'informations contextuelles telles que la géo-localisation ou la disponibilité de la personne avec des informations liées à la relation sociale de cette personne avec l'utilisateur du terminal considéré, permet de définir des situations contextuelles complexes, encore désignées dans le cadre de la présente invention par "méta-situation", et correspondant à un ensemble de contacts associés à leur contexte (données contextuelles).

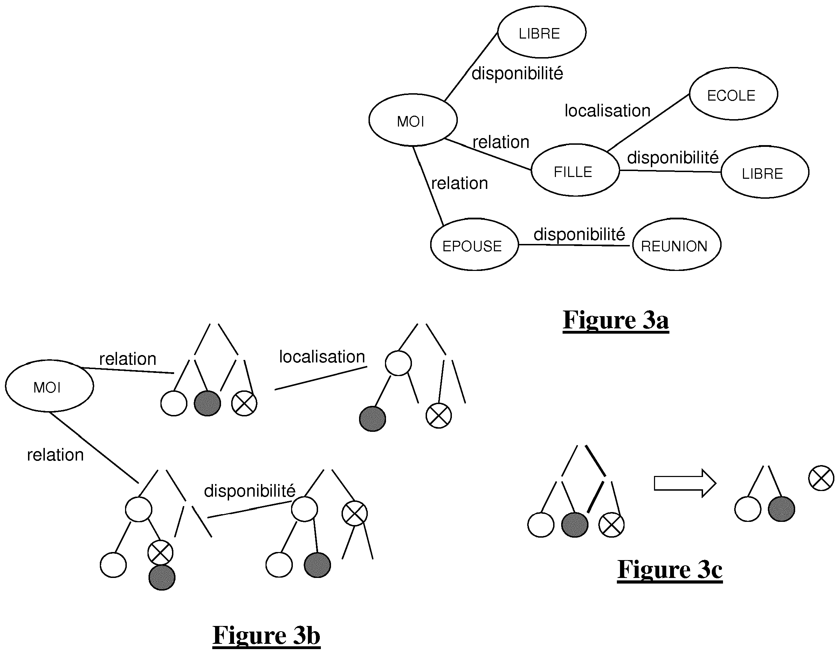

Ces méta-situations sont définies à l'aide d'un modèle conceptuel utilisant une structure de données à base de graphes, dont un exemple est illustré à la **figure 3a.**

Chaque graphe tel que celui représenté sur la figure 3a comporte un nœud racine (*moi*) représentant l'utilisateur du terminal, duquel partent des arêtes de relation sociale de l'utilisateur vers des nœuds représentant un type de relation (*fille, épouse*) correspondant à des contacts de l'utilisateur. Chaque nœud-relation (contact ou utilisateur) est par ailleurs le point de départ d'une ou plusieurs arrêtes représentant un type d'information contextuelle (*localisation, disponibilité*) aboutissant à un nœud définissant une valeur particulière d'information de contexte (*libre, école, réunion*).

L'exemple de graphe de la figure 3a représente par conséquent des valeurs contextuelles courantes relatives aux contacts "*fille*" et "*épouse*" de l'utilisateur "*moi*", et la situation contextuelle complexe ou méta-situation qui peut être déduite automatiquement selon l'invention est la suivante : "*fille* quitte l'école alors que *épouse* est occupée".

Ainsi, grâce au modèle conceptuel exposé ci-dessus, l'utilisateur peut créer des règles de notification utilisateur (étape E10 figure 2) associant un message de notification à une méta-situation telle que définie ci-dessus.

Chaque règle de notification d'utilisateur créée dans un terminal donné de l'ensemble de terminaux T1-TN est enregistrée dans le terminal par l'application de répertoire T_APP et une copie est envoyée automatiquement à destination du serveur d'application SVR (étape E12).

Côté serveur, à l'étape E20, les données représentatives de situations contextuelles utilisateurs en provenance des terminaux de communication T1-TN sont reçues par le module RU de stockage de règles de notifications d'utilisateurs. L'ensemble des règles reçues est alors transféré au module GEN de généralisation sémantique pour y subir d'abord une opération de regroupement (étape E22) puis un traitement de généralisation sémantique (E24) dont le résultat est la création d'une base de données de situations contextuelles de référence (étape E26).

L'étape de regroupement E22 à pour but de regrouper les situations contextuelles utilisateurs (RNU) en fonction d'un ou plusieurs critères de similarité prédéfinis afin d'obtenir des groupes de situations contextuelles utilisateurs similaires.

Comme exposé plus haut en relation avec la figure 3a, chaque situation contextuelle complexe (méta-situation) est représentée par un graphe particulier constitués de nœuds définissant les concepts contextuels (*épouse, fille, libre*) et des arrêtes définissant les dimensions contextuelles correspondantes (*relation, relation, disponibilité*).

Selon le mode de réalisation choisi, on utilise un algorithme de comparaison de la structure de graphes pour déterminer si des graphes comparés ont la même structure sémantique. En pratique, dans le mode de réalisation décrit, l'algorithme utilisé est une adaptation de celui décrit dans le document "*Conceptual Graph Matching for Semantic Search*" de Jiwei Zhong et al. - 10th International Conférence on Conceptual Structures: Intégration and Interfaces, 2002. Plus précisément, on utilise une méthode de calcul de similarité qui permet de calculer de manière récursive la similarité entre deux graphes, par un calcul de distances entre les concepts et leurs relations.

Un ensemble de graphes représentatifs chacun d'une situation contextuelle (méta-situation), dont les éléments (graphe) sont déterminés comme étant similaires, par application de la méthode de calcul mentionnée ci-dessus, détermine un groupe de situations contextuelles utilisateurs. Le calcul de similarité est ensuite appliqué pour comparer chaque nouvelle situation contextuelle reçue d'un terminal avec un représentant de chacun des groupes précités. Si la nouvelle situation contextuelle est déterminée comme étant similaire à un représentant d'un groupe, celle-ci rejoint le groupe.

A l'étape de généralisation E24 qui suit, un algorithme de généralisation est appliqué à chaque groupe de situations contextuelles. Selon l'algorithme utilisé dans le mode de réalisation choisi, pour chaque groupe de méta-situations, on commence par construire un graphe, désigné par méta-arbre, dont la structure est semblable à celle de l'ensemble des méta-situations composant le groupe. Cependant, chaque nœud du méta-graphe est représenté comme une taxonomie de concepts d'un type donné - par exemple une taxonomie de types de relation sociale si une arête donnée aboutit à un nœud-relation - de manière à représenter l'ensemble des graphes du groupe de méta-situations.

La **figure 3b** donne un exemple de méta-arbre représentant un groupe de méta-situations avant généralisation. Le tableau ci-dessous présente à titre d'exemple des données de contexte correspondant au méta-arbre représenté à la figure 3b.

Tableau 1

| Données | 1er contact | | 2ème contact | |
|---|---|---|---|---|
| | Relation | Localisation | Relation | Disponibilité |
| Blanche | *Fille* | *Ecole* | *Epouse* | *Réunion* |
| Noire | *Fils* | *Ecole Cafétéria* | *Mari* | *Dépannage en cours* |
| Croix | *Père* | *Boutique* | *Mari* | *Libre* |

On peut remarquer dans l'exemple donné par le tableau ci-dessus que les situations contextuelles référencées par la couleur noire (disques noirs sur la fig. 3b) et celles référencées par la couleur blanche (disques blancs sur la fig. 3b) concernent des concepts relativement proches par type de concept (relation, localisation, disponibilité). Le mécanisme de généralisation selon l'invention exploite cela en séparant les concepts qui apparaissent sémantiquement éloignés, dans chaque arbre taxonomique (c'est-à-dire les arbres formant les nœuds du méta-arbre).

Par exemple, comme représenté par la **figure 3c,** dans l'arbre de taxonomie correspondant aux valeurs de relation (*fille, fils, père*) pour le premier contact, dans le tableau 1, les branches apparaissant en trait gras seront supprimées afin de séparer les concepts *fille* (disque blanc) et *fils* (disque noir) qui sont similaires, du concept *père* (disque avec croix). Une fois l'ensemble des méta-arbres traités selon l'exemple ci-dessus, l'algorithme de généralisation sémantique selon l'invention procède à la généralisation sémantique des concepts similaires. Par exemple, les concepts *fille* et *fils,* pour la dimension contextuelle *relation,* sont généralisés en un concept unique : le concept *enfant.*

Le tableau 2 ci-dessous présente les données de contexte du tableau 1, après généralisation sémantique.

Tableau 2

| Données | 1er contact | | 2ème contact | |
|---|---|---|---|---|
| | Relation | Localisation | Relation | Disponibilité |
| Blanche et Noire | *Enfant* | *Ecole* | *Conjoint* | *Occupé* |
| Croix | *Père* | *Boutique* | *Mari* | *Libre* |

De retour à la **Figure 2,** l'étape E24 de généralisation sémantique exposée ci-dessus, permet d'obtenir (étape E26) un ensemble de méta-situations généralisées, désignées par situations contextuelles de référence (SCR), stockées par le module RG du serveur SVR (fig. 1).

Des données représentatives des situations contextuelles de référence sont ensuite transmises (étape E28) de manière automatique à l'ensemble des terminaux T1-TN de la communauté d'utilisateurs. En pratique, les situations contextuelles de référence sont générées ou mises à jour, puis transmises aux terminaux, de manière régulière, en fonction des nouvelles règles d'utilisateurs (RNU) et des informations de choix des utilisateurs (flèche R, expliquée plus loin), reçues (étape E20).

Côté terminal, à l'étape E30, les nouvelles situations contextuelles de référence sont reçues par le module de comparaison SIM du terminal, et à l'étape E32 le module SIM effectue automatiquement une comparaison, selon un critère de similarité prédéterminé, entre chacune des situations contextuelles de référence et une situation contextuelle courante déterminée en fonction des données contextuelles courantes d'au moins un sous-ensemble de contacts du répertoire du terminal. Lors de cette étape, les situations contextuelles de référence sont également confrontées aux situations contextuelles utilisateurs définies selon les règles de notification utilisateur (RNU).

En pratique, les situations contextuelles définies par l'utilisateur du terminal (règles de notification utilisateur, RNU) et les situations contextuelles de référence (SCR), reçues du serveur SVR, sont comparées en temps réel avec les données contextuelles courantes associées aux contacts du répertoire du terminal, lesquelles évoluent au cours du temps.

Dans le mode de réalisation choisi, les situations RNU et les situations SCR sont comparées avec une situation contextuelle courante relative à des contacts du répertoire du terminal, en appliquant un algorithme d'un type connu sous le nom *d'algorithme de Rete*. Un tel algorithme est décrit dans le document intitulé " Rete: A Fast Algorithm for the Many Pattern/Many Object Pattern Match Problem" de C. L. Forgy - Artificial Intelligence, vol. 19, pp. 17-37, 1982.

Lorsqu'une situation contextuelle utilisateur (RNU) ou une situation contextuelle de référence (SCR) est déterminée selon l'algorithme de Rete comme étant similaire à une situation contextuelle courante (étape E34, oui) - c'est-à-dire correspondant à une situation contextuelle définie par les informations contextuelles courantes d'un ensemble de contacts du répertoire du terminal -, un message de notification correspondant est présenté dans le terminal (étape E36). Dans le cas contraire (étape E34, non), on revient à l'étape E32 de comparaison décrite plus haut.

En pratique, dans le mode de réalisation décrit, le message de notification précité est présenté sous la forme d'un message textuel affiché sur l'écran du terminal via l'interface utilisateur (UI), par l'application de répertoire T_APP. Par ailleurs, dans le mode de réalisation choisi, le message affiché est accompagné de la présentation d'un choix d'options (E38) à destination de l'utilisateur, relatives au traitement de la situation contextuelle notifiée. Dans l'implémentation choisie de l'invention, les options proposées à l'utilisateur relativement à, notamment, une notification de situation contextuelle de référence, sont les suivantes:

- acceptation de la notification ;
- enregistrement local de la notification comme règle de notification utilisateur ;
- rejet de la notification ;
- transfert de la notification à un contact de l'utilisateur.

En pratique, le message de notification inclut au moins une recommandation d'action à l'utilisateur du terminal. Par exemple, dans le cas de la situation : *"enfant* quitte école alors que *conjoint* est occupé", la recommandation pourra être la suivante : "Voulez-vous entrer en communication téléphonique avec *grand-père* pour chercher *enfant* à l'école ?".

Dans ce cas, si l'utilisateur accepte l'action proposée (E38, OK) l'action est exécutée (E40). On peut prévoir également de proposer à l'utilisateur de rendre l'exécution de l'action automatique, et si l'utilisateur accepte, la présentation ultérieure d'un message de notification pour cette situation contextuelle, déclenchera l'exécution automatique de l'action dans le terminal.

Lorsque, suite à une notification d'une situation contextuelle, l'utilisateur a refusé les options de choix proposées (E38, NOK) ou bien a accepté au moins une action proposée (E38, OK), et chaque fois qu'une action a été exécutée (E40), une information correspondante est transmise au serveur d'application SVR (flèche R, puis étape E12).

Cette information de choix de l'utilisateur est transmise au serveur SVR (module RG, fig. 1) afin d'évaluer les suggestions effectuées dans les terminaux utilisateurs (T1-TN) via les notifications de situations contextuelles de référence. A cette fin, dans le serveur SVR, on associé à chaque situation contextuelle de référence (SCR), c'est-à-dire chaque méta-situation contextuelle généralisée, un classement (*rating* en anglais) de fréquence d'utilisation mesurant l'utilité de la règle correspondante pour les utilisateurs. Dans le mode de réalisation choisi, ce classement est défini par la formule suivante :

$$FR = \frac{w_a K_a - w_r K_r + w_d K_d}{N} \qquad (1)$$

Où : N désigne le nombre total de situations SCR ; $W_x$ (x = a, r, d) désignent des paramètres de poids prédéfinis ; $K_y$ (y = a, r, d) désigne un nombre de décisions respectivement, d'acceptation (y = a), de rejet (y = r), de transfert (y = d).

A l'initialisation du système les situations contextuelles de référence sont considérées comme étant acceptées, ensuite chaque situation SCR devient plus ou moins "populaire" avec le temps, en fonction du nombre de décisions d'acceptation ou de rejet de la situation par les utilisateurs de l'ensemble de terminaux (T1-TN). Le classement en termes d'utilité ou de popularité, mesuré par la fonction FR (*Frequency Rating*) de chacune des situations SCR, évolue avec le temps, et une situation SCR donnée est déterminée, à un instant donné, comme suffisamment populaire si son classement FR dépasse un seuil prédéfini. Lorsque ce seuil est atteint la situation SCR est alors automatiquement transmise (E28) à l'ensemble des terminaux.

Ainsi, grâce au procédé de notification de données contextuelles, selon l'invention, il est possible de fournir des recommandations à un utilisateur d'un terminal, en fonction d'informations contextuelles relatives aux contacts d'une répertoire associé au terminal, ces recommandations résultant, d'une part, d'un processus de généralisation sémantique de règles de notification établies par une communauté d'utilisateurs et, d'autre part, d'une évaluation continue de la popularité de ces règles généralisées auprès des utilisateurs.

**Revendications**

1. **Procédé** de notification, à un utilisateur d'un premier terminal de communication, de données relatives à des situations contextuelles concernant des personnes identifiées dans une application de type répertoire téléphonique, dite répertoire, comportant des étapes de :

   (A) - constitution (E20-E26), par un serveur d'application, d'une base de données de situations contextuelles de référence, chaque situation contextuelle de référence étant définie comme une combinaison particulière de données contextuelles relatives à un ensemble de personnes identifiées dans un répertoire de terminal de communication, et étant obtenue par généralisation sémantique de données représentatives de situations contextuelles définies par une communauté d'utilisateurs ;
   (B) - réception (E30) desdites situations contextuelles de référence dans le premier terminal et comparaison (E32), par le premier terminal et selon un critère de similarité prédéfini, desdites situations contextuelles de référence avec une situation contextuelle courante définie par des données contextuelles courantes associées à au moins une personne identifiée dans le répertoire du premier terminal ;
   (C) - si lors de ladite comparaison, au moins une situation contextuelle de référence est déterminée (E34) comme étant similaire à ladite situation contextuelle courante, présentation (E36) dans le premier terminal de communication d'un message de notification représentatif de ladite au moins une situation contextuelle de référence similaire,
   dans lequel l'étape (A) inclut :

   (a1) - la réception (E20) de données représentatives de situations contextuelles utilisateurs en provenance de terminaux de communication de ladite communauté d'utilisateurs, incluant le premier terminal, et équipés respectivement d'un répertoire dans lequel les personnes identifiées sont associées à des données contextuelles ;
   (a2) - la généralisation sémantique (E22, E24) des situations contextuelles utilisateur reçues afin d'obtenir un ensemble de situations contextuelles de référence, chaque situation contextuelle utilisateur étant définie à l'aide d'un graphe constitué de nœuds définissant des concepts contextuels et des arrêtes définissant les dimensions contextuelles correspondantes,

   dans lequel l'opération de généralisation sémantique (a2) de situations contextuelles utilisateur comprend :

   (a21) - le regroupement (E22) desdites situations contextuelles utilisateurs en fonction d'au moins un critère de similarité prédéfini afin d'obtenir des groupes de situations contextuelles utilisateurs similaires, en calculant de manière récursive la similarité entre deux graphes ;
   (a22) - l'application (E24) d'un traitement de généralisation sémantique à chacun des groupes de situations contextuelles utilisateurs obtenu, afin de déterminer pour chacun desdits groupes au moins une situation contextuelle de référence, en construisant un méta-arbre représentant l'ensemble des graphes du groupe de situations contextuelles utilisateurs, et former (E26) ainsi un ensemble de situations contextuelles de référence.

2. Procédé selon la revendication 1, comportant en outre une étape de création (E10), par l'utilisateur du premier terminal, de règles de notification de situations contextuelles, dites « règles de notification », chaque règle de notification associant un message de notification et une situation contextuelle prédéfinie, dite « situation contextuelle utilisateur », relative à un sous-ensemble de personnes du répertoire, la présentation (E36) du message de notification dans le premier terminal étant déclenchée lorsque la situation contextuelle courante relative audit sous-ensemble de personnes du répertoire correspond à la situation contextuelle utilisateur associée au message de notification par la règle de notification.

3. Procédé selon la revendication 2, dans lequel l'étape de comparaison (B) inclut en outre la comparaison (E32), selon le critère de similarité, desdites situations contextuelles de référence avec lesdites situations contextuelles utilisateur.

4. Procédé selon la revendication 1, dans lequel à l'étape (a1) lesdites données représentatives de situations contextuelles définies par une communauté d'utilisateurs sont des règles de notification de situations contextuelles (RNU) transmises par les terminaux (T1-TN) de ladite communauté à destination d'un serveur d'application (SVR) sur un réseau de communication (NW).

**5.** Procédé selon l'une quelconque des revendications précédentes, dans lequel l'étape de présentation d'un message de notification de situation contextuelle dans le premier terminal, est suivie d'une étape de sélection (E38, E40) par l'utilisateur du premier terminal, effectuée au travers d'une interface utilisateur, d'au moins une option de traitement dudit message de notification, parmi un ensemble d'options comprenant au moins les options suivantes :

- acceptation de la notification ;
- enregistrement local de la notification ;
- rejet de la notification ;
- transfert de la notification.

**6.** Procédé selon l'une quelconque des revendications 1 à 5, dans lequel ledit message de notification de situation contextuelle présenté dans le premier terminal, inclut au moins une recommandation d'action à l'utilisateur du premier terminal.

**7.** Procédé selon l'une quelconque des revendications 1 à 5, dans lequel la présentation d'un message notification de situation contextuelle, dans le premier terminal, déclenche l'exécution automatique dans le premier terminal d'une action de communication avec au moins un contact de l'utilisateur du premier terminal.

**8.** Procédé selon l'une quelconque des revendications 1 à 7, dans lequel chaque personne identifiée dans le répertoire d'un terminal quelconque de ladite communauté d'utilisateurs, est associé à une information sémantique représentative de la relation sociale entre la personne et l'utilisateur du terminal.

**9.** Procédé selon l'une quelconque des revendications précédentes, dans lequel les données contextuelles relatives à un élément identifié dans un répertoire accessible via un terminal de communication, incluent tout ou partie des informations contextuelles suivantes :

- géo-localisation de la personne ;
- disponibilité de la personne ;
- activité en cours de la personne ;
- humeur de la personne ;
- applications informatiques en cours d'utilisation par la personne.

**10. Programme** d'ordinateur comportant des instructions de programme pour la mise en œuvre des étapes d'un procédé de notification selon l'une quelconque des revendications 1 à 9, lorsque ce programme est exécuté par plusieurs processeurs.

**11. Système** pour la mise en œuvre d'un procédé de notification selon l'une quelconque des revendications 1 à 9, à un utilisateur d'un premier terminal de communication (T1), de données relatives à des situations contextuelles concernant des personnes identifiées dans une application de type répertoire téléphonique, dite répertoire, du premier terminal (T1), comportant

- des moyens de stockage (RG) d'un serveur d'application d'une base de données de situations contextuelles de référence, chaque situation contextuelle de référence étant définie comme une combinaison particulière de données contextuelles relatives à un ensemble de personnes identifiées dans un répertoire de terminal de communication, au moins une situation contextuelle de référence étant obtenue par généralisation sémantique de données représentatives de situations contextuelles définies par une communauté d'utilisateurs ;
- des moyens de réception (T_COM) desdites situations contextuelles de référence dans le premier terminal (T1),
- des moyens de comparaison (SIM) du premier terminal, selon un critère de similarité prédéfini, desdites situations contextuelles de référence avec une situation contextuelle courante définie par des données contextuelles courantes associées à au moins une personne identifiée dans le répertoire du premier terminal (T1) ;
- des moyens de présentation (UI) dans le premier terminal (T1) de communication d'un message de notification représentatif d'au moins une situation contextuelle de référence qui a été déterminée comme étant similaire à une situation contextuelle courante relative à au moins une personne du répertoire du premier terminal (T), dans lequel le serveur d'application comprend :

- des moyens de réception (S_COM) de données reçue représentatives de situations contextuelles utilisateurs en provenance de terminaux de communication de ladite communauté d'utilisateurs, incluant le premier terminal, et équipés respectivement d'un répertoire dans lequel les personnes identifiées sont associées à des données contextuelles ;
- des moyens de généralisation sémantique (GEN) des situations contextuelles utilisateur reçues afin d'obtenir un ensemble de situations contextuelles de référence, chaque situation contextuelle utilisateur étant définie à l'aide d'un graphe constitué de nœuds définissant des concepts contextuels et des arrêtes définissant les dimensions contextuelles correspondantes, apte à :

- regrouper desdites situations contextuelles utilisateurs en fonction d'au moins un critère de similarité prédéfini afin d'obtenir des groupes de situations contextuelles utilisateurs similaires, en calculant de manière récursive la similarité entre deux graphes ;
- appliquer un traitement de généralisation sémantique à chacun des groupes de situations contextuelles utilisateurs obtenu, afin de déterminer pour chacun desdits groupes au moins une situation contextuelle de référence, en construisant un méta-arbre représentant l'ensemble des graphes du groupe de situations contextuelles utilisateurs, et former ainsi un ensemble de situations contextuelles de référence.

12. **Serveur** d'application (SVR) sur un réseau de communication, mis en œuvre dans un système selon la revendication 11, comprenant

- des moyens de stockage (RG) d'une base de données de situations contextuelles de référence, chaque situation contextuelle de référence étant définie comme une combinaison particulière de données contextuelles relatives à un ensemble de personnes identifiées par une application de type répertoire téléphonique, de terminal de communication (T1, T2, TN) ;
- des moyens de réception (S_COM) de données représentatives de situations contextuelles utilisateurs en provenance d'un ensemble de terminaux de communication (T1, T2, TN), et équipés respectivement d'une application de type répertoire téléphonique, dans laquelle des personnes identifiées sont associées à des données contextuelles ;
- des moyens de généralisation sémantique (GEN) des situations contextuelles utilisateurs reçues afin d'obtenir un ensemble de situations contextuelles de référence enregistré dans ladite base de données, chaque situation contextuelle utilisateur étant définie à l'aide d'un graphe constitué de nœuds définissant des concepts contextuels et des arrêtes définissant les dimensions contextuelles correspondantes, apte à :

- regrouper desdites situations contextuelles utilisateurs en fonction d'au moins un critère de similarité prédéfini afin d'obtenir des groupes de situations contextuelles utilisateurs similaires, en calculant de manière récursive la similarité entre deux graphes ;
- appliquer un traitement de généralisation sémantique à chacun des groupes de situations contextuelles utilisateurs obtenu, afin de déterminer pour chacun desdits groupes au moins une situation contextuelle de référence, en construisant un méta-arbre représentant l'ensemble des graphes du groupe de situations contextuelles utilisateurs, et former ainsi un ensemble de situations contextuelles de référence.

**Patentansprüche**

1. **Verfahren** zur Benachrichtigung eines Benutzers eines ersten Kommunikationsendgeräts über Daten in Zusammenhang mit Kontextsituationen, die Personen betreffen, die in einer Anwendung vom Typ Telefonadressbuch, als Adressbuch bezeichnet, identifiziert werden, umfassend die folgenden Schritte:

(A) - Erstellen (E20-E26), durch einen Anwendungsserver, einer Datenbank mit Referenzkontextsituationen, wobei jede Referenzkontextsituation als eine bestimmte Kombination von Kontextdaten in Zusammenhang mit einem Satz Personen, die in einem Adressbuch eines Kommunikationsendgeräts identifiziert werden, definiert ist, und die durch ein semantisches Generalisieren von Daten, die für Kontextsituationen, die durch eine Benutzergemeinschaft definiert werden, repräsentativ sind, erhalten wird;
(B) - Empfangen (E30) der Referenzkontextsituationen in dem ersten Endgerät und Vergleichen (E32), durch das erste Endgerät und gemäß einem vordefinierten Ähnlichkeitskriterium, der Referenzkontextsituationen mit einer aktuellen Kontextsituation, die durch aktuelle Kontextdaten, die mit mindestens einer in dem Adressbuch des ersten Endgeräts identifizierten Person assoziiert sind, definiert wird;
(C) - wenn bei diesem Vergleich mindestens eine Referenzkontextsituation als zu der aktuellen Kontextsituation ähnlich bestimmt wird (E34), Anzeigen (E36), in dem ersten Kommunikationsendgerät, einer Benachrichtigungsnachricht, die für die mindestens eine ähnliche Referenzkontextsituation repräsentativ ist, wobei der Schritt (A) Folgendes umfasst:

(a1) - Empfangen (E20) von Daten, die für Benutzerkontextsituationen repräsentativ sind, von Kommunikationsendgeräten der Benutzergemeinschaft, umfassend das erste Endgerät, welche jeweils über ein Adressbuch verfügen, in dem die identifizierten Personen mit Kontextdaten assoziiert sind;

(a2) - semantisches Generalisieren (E22, E24) der empfangenen Benutzerkontextsituationen, um einen Satz Referenzkontextsituationen zu erhalten, wobei jede Benutzerkontextsituation mit Hilfe eines Graphen definiert wird, der aus Knoten, die Kontextkonzepte definieren, und Kanten, die die entsprechenden Kontextdimensionen definieren, besteht,

wobei der Vorgang des semantischen Generalisierens (a2) von Benutzerkontextsituationen Folgendes beinhaltet:

(a21) - Umgruppieren (E22) der Benutzerkontextsituationen in Abhängigkeit von mindestens einem vordefinierten Ähnlichkeitskriterium, um Gruppen von ähnlichen Benutzerkontextsituationen zu erhalten, indem die Ähnlichkeit zwischen zwei Graphen rekursiv berechnet wird;

(a22) - Anwenden (E24) einer Verarbeitung zum semantischen Generalisieren auf jede der erhaltenen Gruppen von Benutzerkontextsituationen, um für jede der Gruppen mindestens eine Referenzkontextsituation zu bestimmen, indem ein Metabaum, der den Satz Graphen der Gruppe von Benutzerkontextsituationen darstellt, konstruiert wird, und auf diese Weise Bilden (E26) eines Satzes Referenzkontextsituationen.

2. Verfahren nach Anspruch 1, das ferner einen Schritt des Erzeugens (E10), durch den Benutzer des ersten Endgeräts, von Regeln zur Benachrichtigung über Kontextsituationen, als "Benachrichtigungsregeln" bezeichnet, umfasst, wobei jede Benachrichtigungsregel eine Benachrichtigungsnachricht mit einer vordefinierten Kontextsituation, als "Benutzerkontextsituation" bezeichnet, in Zusammenhang mit einem Teilsatz von Personen des Adressbuchs assoziiert, wobei das Anzeigen (E36) der Benachrichtigungsnachricht in dem ersten Endgerät ausgelöst wird, wenn die aktuelle Kontextsituation in Zusammenhang mit dem Teilsatz von Personen des Adressbuchs der durch die Benachrichtigungsregel mit der Benachrichtigungsnachricht assoziierten Benutzerkontextsituation entspricht.

3. Verfahren nach Anspruch 2, wobei der Schritt des Vergleichens (B) ferner das Vergleichen (E32), gemäß dem Ähnlichkeitskriterium, der Referenzkontextsituationen mit den Benutzerkontextsituationen umfasst.

4. Verfahren nach Anspruch 1, wobei in dem Schritt (a1) die Daten, die für Kontextsituationen, die durch eine Benutzergemeinschaft definiert werden, repräsentativ sind, Regeln zur Benachrichtigung über Kontextsituationen (RNU) sind, die von den Endgeräten (T1-TN) der Gemeinschaft über ein Kommunikationsnetzwerk (NW) an einen Anwendungsserver (SVR) übertragen werden.

5. Verfahren nach einem der vorhergehenden Ansprüche, wobei der Schritt des Anzeigens einer Benachrichtigungsnachricht über eine Kontextsituation in dem ersten Endgerät gefolgt wird von einem Schritt des Auswählens (E38, E40), durch den Benutzer des ersten Endgeräts und über eine Benutzerschnittstelle, mindestens einer Option zur Verarbeitung der Benachrichtigungsnachricht aus einem Satz Optionen, der mindestens die folgenden Optionen beinhaltet:

- Akzeptieren der Benachrichtigung;
- lokales Speichern der Benachrichtigung;
- Ablehnen der Benachrichtigung;
- Weiterleiten der Benachrichtigung.

6. Verfahren nach einem der Ansprüche 1 bis 5, wobei die Benachrichtigungsnachricht über eine Kontextsituation, die in dem ersten Endgerät angezeigt wird, mindestens eine Handlungsempfehlung für den Benutzer des ersten Endgeräts umfasst.

7. Verfahren nach einem der Ansprüche 1 bis 5, wobei das Anzeigen einer Benachrichtigungsnachricht über eine Kontextsituation in dem ersten Endgerät das automatische Ausführen, in dem ersten Endgerät, einer Handlung zur Kommunikation mit mindestens einem Kontakt des Benutzers des ersten Endgeräts auslöst.

8. Verfahren nach einem der Ansprüche 1 bis 7, wobei jede in dem Adressbuch eines beliebigen Endgeräts der Benutzergemeinschaft identifizierte Person mit einer semantischen Information, die für die soziale Beziehung zwischen der Person und dem Benutzer des Endgeräts repräsentativ ist, assoziiert ist.

9. Verfahren nach einem der vorhergehenden Ansprüche, wobei die Kontextdaten in Zusammenhang mit einem in einem Adressbuch, auf das über ein Kommunikationsendgerät zugegriffen werden kann, identifizierten Element alle oder einen Teil der folgenden Kontextinformationen umfassen:

- Geolokalisierung der Person;
- Verfügbarkeit der Person;
- laufende Aktivität der Person;
- Stimmung der Person;
- von der Person gerade verwendete IT-Anwendungen.

10. **Computerprogramm,** das Programmanweisungen zur Umsetzung der Schritte eines Verfahrens zur Benachrichtigung nach einem der Ansprüche 1 bis 9 umfasst, wenn dieses Programm von mehreren Prozessoren ausgeführt wird.

11. **System** zur Umsetzung eines Verfahrens nach einem der Ansprüche 1 bis 9 zur Benachrichtigung eines Benutzers eines ersten Kommunikationsendgeräts (T1) über Daten in Zusammenhang mit Kontextsituationen, die Personen betreffen, die in einer Anwendung vom Typ Telefonadressbuch, als Adressbuch bezeichnet, des ersten Endgeräts (T1) identifiziert werden, umfassend:

- Mittel (RG) eines Anwendungsservers zum Speichern einer Datenbank mit Referenzkontextsituationen, wobei jede Referenzkontextsituation als eine bestimmte Kombination von Kontextdaten in Zusammenhang mit einem Satz Personen, die in einem Adressbuch eines Kommunikationsendgeräts identifiziert werden, definiert ist, wobei mindestens eine Referenzkontextsituation durch ein semantisches Generalisieren von Daten, die für Kontextsituationen, die durch eine Benutzergemeinschaft definiert werden, repräsentativ sind, erhalten wird;
- Mittel zum Empfangen (T_COM) der Referenzkontextsituationen in dem ersten Endgerät (T1),
- Mittel (SIM) des ersten Endgeräts zum Vergleichen, gemäß einem vordefinierten Ähnlichkeitskriterium, der Referenzkontextsituationen mit einer aktuellen Kontextsituation, die durch aktuelle Kontextdaten, die mit mindestens einer in dem Adressbuch des ersten Endgeräts (T1) identifizierten Person assoziiert sind, definiert wird;
- Mittel zum Anzeigen (UI), in dem ersten Kommunikationsendgerät (T1), einer Benachrichtigungsnachricht, die für mindestens eine Referenzkontextsituation repräsentativ ist, die als zu einer aktuellen Kontextsituation in Zusammenhang mit mindestens einer Person des Adressbuchs des ersten Endgeräts (T) ähnlich bestimmt wurde,

wobei der Anwendungsserver Folgendes beinhaltet:

- Mittel zum Empfangen (S_COM) von empfangenen Daten, die für Benutzerkontextsituationen repräsentativ sind, von Kommunikationsendgeräten der Benutzergemeinschaft, umfassend das erste Endgerät, welche jeweils über ein Adressbuch verfügen, in dem die identifizierten Personen mit Kontextdaten assoziiert sind;
- Mittel zum semantischen Generalisieren (GEN) der empfangenen Benutzerkontextsituationen, um einen Satz Referenzkontextsituationen zu erhalten, wobei jede Benutzerkontextsituation mit Hilfe eines Graphen definiert wird, der aus Knoten, die Kontextkonzepte definieren, und Kanten, die die entsprechenden Kontextdimensionen definieren, besteht und zu Folgendem fähig ist:
- Umgruppieren der Benutzerkontextsituationen in Abhängigkeit von mindestens einem vordefinierten Ähnlichkeitskriterium, um Gruppen von ähnlichen Benutzerkontextsituationen zu erhalten, indem die Ähnlichkeit zwischen zwei Graphen rekursiv berechnet wird;
- Anwenden einer Verarbeitung zum semantischen Generalisieren auf jede der erhaltenen Gruppen von Benutzerkontextsituationen, um für jede der Gruppen mindestens eine Referenzkontextsituation zu bestimmen, indem ein Metabaum, der den Satz Graphen der Gruppe von Benutzerkontextsituationen darstellt, konstruiert wird, und auf diese Weise Bilden eines Satzes Referenzkontextsituationen.

12. **Anwendungsserver** (SVR) in einem Kommunikationsnetzwerk, der in einem System nach Anspruch 11 implementiert ist und Folgendes beinhaltet:

- Mittel zum Speichern (RG) einer Datenbank mit Referenzkontextsituationen, wobei jede Referenzkontextsituation als eine bestimmte Kombination von Kontextdaten in Zusammenhang mit einem Satz Personen, die durch eine Anwendung vom Typ Telefonadressbuch eines Kommunikationsendgeräts (T1, T2, TN) identifiziert werden, definiert ist;
- Mittel zum Empfangen (S_COM) von Daten, die für Benutzerkontextsituationen repräsentativ sind, von einem Satz Kommunikationsendgeräten (T1, T2, TN), welche jeweils über eine Anwendung vom Typ Telefonadressbuch verfügen, in der identifizierte Personen mit Kontextdaten assoziiert sind;
- Mittel zum semantischen Generalisieren (GEN) der empfangenen Benutzerkontextsituationen, um einen Satz Referenzkontextsituationen, der in der Datenbank gespeichert wird, zu erhalten, wobei jede Benutzerkontextsituation mit Hilfe eines Graphen definiert wird, der aus Knoten, die Kontextkonzepte definieren, und Kanten, die die entsprechenden Kontextdimensionen definieren, besteht und zu Folgendem fähig ist:
- Umgruppieren der Benutzerkontextsituationen in Abhängigkeit von mindestens einem vordefinierten Ähnlichkeitskriterium, um Gruppen von ähnlichen Benutzerkontextsituationen zu erhalten, indem die Ähnlichkeit zwischen zwei Graphen rekursiv berechnet wird;
- Anwenden einer Verarbeitung zum semantischen Generalisieren auf jede der erhaltenen Gruppen von Benutzerkontextsituationen, um für jede der Gruppen mindestens eine Referenzkontextsituation zu bestimmen, indem ein Metabaum, der den Satz Graphen der Gruppe von Benutzerkontextsituationen darstellt, konstruiert wird, und auf diese Weise Bilden eines Satzes Referenzkontextsituationen.

**Claims**

1. Method for notifying a user of a first communication terminal of data relating to contextual situations concerning persons identified in a phone book-type application, known as a directory, including steps of:

   (A) - forming (E20-E26), by means of an application server, a database of reference contextual situations, each reference contextual situation being defined as a particular combination of contextual data relating to a set of persons identified in a communication terminal directory and being obtained by semantic generalization of data representative of contextual situations defined by a community of users;
   (B) - receiving (E30) said reference contextual situations in the first terminal and comparing (E32), by means of the first terminal and according to a predefined similarity criterion, said reference contextual situations with a current contextual situation defined by current contextual data associated with at least one person identified in the directory of the first terminal;
   (C) - if, during said comparison, at least one reference contextual situation is determined (E34) as being similar to said current contextual situation, presenting (E36), in the first communication terminal, a notification message representative of said at least one similar reference contextual situation,
   wherein step (A) includes:

      (a1) - receiving (E20) data representative of user contextual situations from communication terminals of said community of users that include the first terminal and are respectively provided with a directory in which the identified persons are associated with contextual data;
      (a2) - performing semantic generalization (E22, E24) of the received user contextual situations so as to obtain a set of reference contextual situations, each user contextual situation being defined by means of a graph consisting of nodes defining contextual concepts and edges defining the corresponding contextual dimensions, wherein the operation of semantic generalization (a2) of user contextual situations comprises:

         (a21) - grouping together (E22) said user contextual situations on the basis of at least one predefined similarity criterion so as to obtain groups of similar user contextual situations, by recursively calculating the similarity between two graphs;
         (a22) - applying (E24) semantic generalization processing to each one of the obtained user contextual situation groups so as to determine, for each one of said groups, at least one reference contextual situation, by constructing a meta-tree representing all of the graphs of the user contextual situation group, and thus to form (E26) a set of reference contextual situations.

2. Method according to Claim 1, further including a step of the user of the first terminal creating (E10) contextual situation notification rules, known as "notification rules", each notification rule associating a notification message and a predefined contextual situation, known as a "user contextual situation", relating to a subset of persons in the directory, the presentation (E36) of the notification message in the first terminal being triggered when the current contextual situation relating to said subset of persons in the directory corresponds to the user contextual situation associated with the notification message by the notification rule.

**3.** Method according to Claim 2, wherein the comparison step (B) further includes comparing (E32), according to the similarity criterion, said reference contextual situations with said user contextual situations.

**4.** Method according to Claim 1, wherein in step (a1) said data representative of contextual situations defined by a community of users are contextual situation notification rules (RNU) transmitted by the terminals (T1-TN) of said community to an application server (SVR) on a communication network (NW).

**5.** Method according to any one of the preceding claims, wherein the step of presenting a contextual situation notification message in the first terminal is followed by a step (E38, E40), performed via a user interface, of the user of the first terminal selecting at least one processing option for processing said notification message from among a set of options comprising at least the following options:

- accepting the notification;
- locally recording the notification;
- rejecting the notification;
- transferring the notification.

**6.** Method according to any one of Claims 1 to 5, wherein said contextual situation notification message presented in the first terminal includes at least one action recommendation for the user of the first terminal.

**7.** Method according to any one of Claims 1 to 5, wherein the presentation of a contextual situation notification message in the first terminal triggers the automatic execution, in the first terminal, of an action of communicating with at least one contact of the user of the first terminal.

**8.** Method according to any one of Claims 1 to 7, wherein each person identified in the directory of any terminal of said community of users is associated with an item of semantic information representative of the social relationship between the person and the user of the terminal.

**9.** Method according to any one of the preceding claims, wherein the contextual data relating to an element identified in a directory accessible via a communication terminal include all or some of the following items of contextual information:

- geolocation of the person;
- availability of the person;
- current activity of the person;
- mood of the person;
- computing applications currently being used by the person.

**10.** Computer program including program instructions for implementing the steps of a notification method according to any one of Claims 1 to 9 when this program is executed by a plurality of processors.

**11.** System for implementing a method according to any one of Claims 1 to 9 for notifying a user of a first communication terminal (T1) of data relating to contextual situations concerning persons identified in a phone book-type application, known as a directory, of the first terminal (T1), including:

- storage means (RG) of an application server for storing a database of reference contextual situations, each reference contextual situation being defined as a particular combination of contextual data relating to a set of persons identified in a communication terminal directory, at least one reference contextual situation being obtained by semantic generalization of data representative of contextual situations defined by a community of users;
- receiving means (T_COM) for receiving said reference contextual situations in the first terminal (T1);
- comparison means (SIM) of the first terminal for comparing, according to a predefined similarity criterion, said reference contextual situations with a current contextual situation defined by current contextual data associated with at least one person identified in the directory of the first terminal (T1);
- presentation means (UI) for presenting, in the first communication terminal (T1), a notification message representative of at least one reference contextual situation that has been determined as being similar to a current contextual situation relating to at least one person in the directory of the first terminal (T),

wherein the application server comprises:

- receiving means (S_COM) for receiving received data representative of user contextual situations from communication terminals of said community of users that include the first terminal and are respectively provided with a directory in which the identified persons are associated with contextual data;
- semantic generalization means (GEN) for performing semantic generalization of the received user contextual situations so as to obtain a set of reference contextual situations, each user contextual situation being defined by means of a graph consisting of nodes defining contextual concepts and edges defining the corresponding contextual dimensions, capable of:
- grouping together said user contextual situations on the basis of at least one predefined similarity criterion so as to obtain groups of similar user contextual situations, by recursively calculating the similarity between two graphs;
- applying semantic generalization processing to each one of the obtained user contextual situation groups so as to determine, for each one of said groups, at least one reference contextual situation, by constructing a meta-tree representing all of the graphs of the user contextual situation group, and thus to form a set of reference contextual situations.

12. Application server (SVR) on a communication network, which is employed in a system according to Claim 11, comprising:

- storage means (RG) for storing a database of reference contextual situations, each reference contextual situation being defined as a particular combination of contextual data relating to a set of persons identified by a phone book-type application of a communication terminal (T1, T2, TN);
- receiving means (S_COM) for receiving data representative of user contextual situations from a set of communication terminals (T1, T2, TN), which are respectively provided with a phone book-type application in which identified persons are associated with contextual data;
- semantic generalization means (GEN) for performing semantic generalization of the received user contextual situations so as to obtain a set of reference contextual situations, which is recorded in said database, each user contextual situation being defined by means of a graph consisting of nodes defining contextual concepts and edges defining the corresponding contextual dimensions, capable of:

- grouping together said user contextual situations on the basis of at least one predefined similarity criterion so as to obtain groups of similar user contextual situations, by recursively calculating the similarity between two graphs;
- applying semantic generalization processing to each one of the obtained user contextual situation groups so as to determine, for each one of said groups, at least one reference contextual situation, by constructing a meta-tree representing all of the graphs of the user contextual situation group, and thus to form a set of reference contextual situations.

**Figure 1**

**Terminal Utilisateur** <u>T1</u>　　　　　　　　　　　　　　NW　　　　　　　**Serveur d'Application** <u>SVR</u>

| Création règles de notification utilisateur (RNU) | E10 |

↓

| Envoi RNU à SVR | E12 | ┄┄┄┄┄┄┄┄→ | Réception RNU de T1-TN | E20 |

　　　　　　　　　　　　　　　　　　　　　　　　　　↓

| Réception SCR | E30 | ←┄┄┄┄　 | Regroupement situations contextuelles | E22 |

↓　　　　　　　　　　　　　　　　　　　　　　　↓

| Comparaison situation contextuelle courante avec SCR et RNU | E32 | | Traitement de généralisation sémantique . | E24 |

↓　　　　　　　　　　　　　　　　　　　　　　↓

SCR applicable ? — E34 　　Non →

| Création Situations contextuelles de référence (SCR) | E26 |

Oui ↓　　　　　　　　　　　　　　　　　　　↓

| Présentation SCR | E36 | 　　　| Envoi SCR à T1-TN | E28 |

↓

Choix utilisateur ? — E38 　　NOK

OK ↓

| Exécuter action SCR | E40 |

R

## <u>Figure 2</u>

EP 2 645 311 B1

Figure 3a

Figure 3b

Figure 3c

## RÉFÉRENCES CITÉES DANS LA DESCRIPTION

**Documents brevets cités dans la description**

- WO 2010103163 A

**Littérature non-brevet citée dans la description**

- **A. SCHMIDT ; T. STUHR ; H. GELLERSEN.** Context-Phonebook - Extending Mobile Phone Applications with Context. *Third International Workshop on Human Computer Interaction with Mobile Devices,* 2001

- **JIWEI ZHONG et al.** Conceptual Graph Matching for Semantic Search. *10th International Conférence on Conceptual Structures: Intégration and Interfaces,* 2002
- **C. L. FORGY.** Rete: A Fast Algorithm for the Many Pattern/Many Object Pattern Match Problem. *Artificial Intelligence,* 1982, vol. 19, 17-37